# EUROPEAN PATENT APPLICATION

(11) **EP 4 488 566 A1**
(43) Date of publication of application: **08.01.2025**
(21) Application number: 24020221.8
(22) Date of filing: 03.07.2024
(51) Int. Cl.: F16P 3/08

(54) **SAFETY APPARATUS AND SYSTEM**

(30) Priority: 05.07.2023 IT 202300014040
(71) Applicant: Pizzato Elettrica S.r.l., 36063 Marostica (Vicenza) (IT)
(72) Inventor: Pizzato, Marco, 36063 Marostica (VI) (IT)
(74) Representative: Dalla Rosa, Silvia

(57) **Abstract**

A safety apparatus (**1**) comprises a safety switch (**10**) and an actuator (**15**) designed to be associated with a guard (**11**) of a protective barrier (**12**) for a machine (**13**) or industrial plant, wherein the safety switch (**10**) comprises switching means (**19**) designed to undergo to an active state and an inactive state, a seat (**21**) for the actuator (**15**) shaped to allow both the insertion of the actuator (**15**) from a plurality of insertion directions (**A**) defining an opening angular range (**α**) and the alignment of the actuator (**15**) in at least one safety direction (**B**) comprised in a safety angular range (**β**), wherein the safety angle range (**β**) has an amplitude lower than the amplitude of the opening angle range (**α**).

## Description

### Technical Field

This invention refers to an apparatus and a safety system suitable for application in the industrial automation field, in particular for control of the accesses within a safety perimeter of a machine or an industrial plant.

### State of the art

In the industrial automation field, it is known to enclose a machine or system characterized by a dangerous operation inside mechanical barriers for preventing an operator from coming into contact with the machine during its operation.

Normally, for maintenance reasons, mechanical barriers also include at least one access that allows a specialized operator to enter the area delimited by the mechanical barriers to operate on the machine. The access is protected by a guard that usually comprises a fixed part, integral with the mechanical barriers, and a movable part that can be moved with respect to the fixed part to allow or not an operator to go beyond the access and entering the area protected by the mechanical barriers.

The movement of the movable part with respect to the fixed part is normally allowed by supports such as hinges, if the movable part is a leaf door, or guides, if the movable part is a sliding door.

As known, a safety switch is anchored to the fixed part and an actuator is fixed to the movable part and interacts with the safety switch upon the opening or closing of the guard.

The safety switch comprises a seat for the actuator and a locking pin movable along a locking axis to lock the actuator when it is inserted in the seat, so as to keep the guard closed and locked. The interaction between the safety switch and the actuator also allows the state of the movable guard to be detected, i.e. whether it is open, closed or locked, and to safely signal this state to a control device. Then, the control device, for example a PLC or a safety module, controls the power supply to the machine depending on the state of the movable guard. Usually, the control device allows the machine to start only when it detects that the movable guard is closed and locked.

In this context, a known type of safety switch has a seat for the actuator that allows the actuator to be inserted and locked in any direction within an angular range of 180° having as its vertex a point on the axis of movement of the locking pin.

Some examples of this type of safety switches are described in EP3498955 and EP3657063.

For example, in EP3498955 the seat for the insertion of the actuator has a width of 180° and all the directions of insertion of the actuator inside this seat are simultaneously also locking directions, i.e. directions along which the actuator will be locked.

In this way the actuator can be introduced into the seat along any of the insertion directions comprised in the angular range of 180° and at the same time it can be locked on the fixed part along the same direction, which will therefore also be the locking direction. Consequently, the angular intervals of the insertion direction and the locking direction correspond to each other and have the same width, corresponding to the width of the seat, with a continuous value of at least 180°.

Although these safety switches are appreciated because they are compatible with many different types of guards, they also have some drawbacks.

A drawback of this type of known switches is that the actuator in the locked state is free to rotate around the axis of movement of the locking pin. This can lead to potentially dangerous situations for an operator in the event of failure of the supports of the movable part of the guard during operation of the machine.

For example, wear, poor maintenance, tampering or accidental breakage of the supports of the movable part can lead to the accidental release of the movable part from the fixed part of the guard. In this case, the movable part of the guard would only be hinged with respect to the safety switch and therefore is suitable to rotate around the axis of movement of the locking pin. This would allow an operator to cross the access during operation of the machine. In fact, the switch would not be able to detect the release of the movable part from the fixed part of the guard and would continue to allow normal operation of the machine even though an operator may be exposed to the working machine.

### Scope of the invention

An object of the present invention is to provide a safety apparatus that allows to increase the level of safety for the operator while and that is at the same time compatible with the different types of access.

Another object of the present invention is to provide a safety device that allows to stop the machine or in any case prevent access thereto even in the case of the release of the movable part from the fixed part of the guard.

The objects of the present invention, as well as others that will become more apparent hereinafter, are achieved by a safety apparatus for controlling access to industrial machines or plants which, in accordance with claim 1, comprises a safety switch and an actuator both designed to be associated with a guard of a protective barrier for an industrial machine or plant and to interact with each other upon the opening and closing of the guard. The safety switch comprises:
- switching means designed to undergo to an active state and an inactive state;
- a seat for the actuator which is shaped to allow both insertion of the actuator from a plurality of insertion directions defining an opening angular range and the alignment of the actuator along at least one safety direction within a safety angular range;
- a locking mechanism comprising a locking pin movable along a locking axis designed to selectively lock the actuator in the seat;
- a control unit connected to the switching means and designed to turn or hold the same in the active state when the actuator is arranged in the seat aligned along a direction within the safety angular range.

According to one aspect of the present invention, the safety angular range has an amplitude less than the amplitude of the opening angular range.

According to embodiments of the present invention, the amplitude of the opening angular range is at least 90° and the amplitude of the safety angular range is between 0° and 45°.

According to embodiments of the present invention, the amplitude of the opening angular range is greater than or equal to 180°.

According to embodiments of the present invention, the control unit is designed to turn the switching means into the active state only when the actuator is locked in the seat and is aligned along a direction comprised in the safety angular range.

According to embodiments of the present invention, the rotation of the actuator, when locked by the locking mechanism, around the locking axis is limited to the safety angular range by the mechanical interference between the actuator and the seat. According to embodiments of the present invention, the switch comprises a first communication member and the actuator comprises a second communication member designed to interact remotely with the first communication member when it is close thereto to transmit a presence signal to the control unit.

Furthermore, the control unit is designed to compare at least one parameter of the presence signal with at least one predetermined threshold to detect whether or not the actuator is aligned along a direction within the safety angular range.

According to embodiments of the present invention, the control unit is designed to turn the switching means into the inactive state when the actuator is aligned along a direction not comprised inside the safety angular range.

According to embodiments of the present invention, the first communication member and the second communication member are at least partially overlapped when the actuator is aligned along a direction inside the safety angular range.

According to embodiments of the present invention, the locking pin is designed to undergo to at least one locking position wherein it protrudes into the seat and the safety switch comprises sensor means of the position of the locking pin connected to the control unit to communicate to the latter whether or not the locking pin is in the locking position.

The present invention also relates to a safety system comprising a safety apparatus according to the present invention and a control device connected to the safety switch and to a machine and designed to control the operation of the machine as a function of the state of the switching means.

### Brief disclosure of the drawings

Further features and advantages of the invention will become more apparent in the light of the detailed description of preferred but not exclusive embodiments of the safety apparatus, shown by way of non-limiting example with the aid of the drawing tables wherein:
**Fig. 1** is a schematic view of a safety apparatus according to the present invention, in a condition of use wherein it is associated with a protective barrier of a machine;
**Fig. 2** is a simplified diagram of a connection between the safety apparatus and the machine of Fig. 1;
**Figs. 3** and **4** are simplified axonometric views of respective embodiments of the safety apparatus of the present invention;
**Figs. 5** to **8** are cross-sections of the safety apparatus of Fig. 3 according to a section plane orthogonal to the X-axis;
**Figs. 9** and **12** are top views of the apparatus of Fig. 4;
**Figs. 10, 11** and **13, 14** are cross-sections of the safety apparatus of Fig. 4 according to a section plane orthogonal to the X-axis;
**Fig. 15** is a simplified electrical diagram of a safety apparatus according to the present invention;
**Figs. 16** and **17** are top views of respective embodiments of the safety apparatus of the present invention in a condition of use in which they are associated with a guard.

### Best modes of carrying out the invention

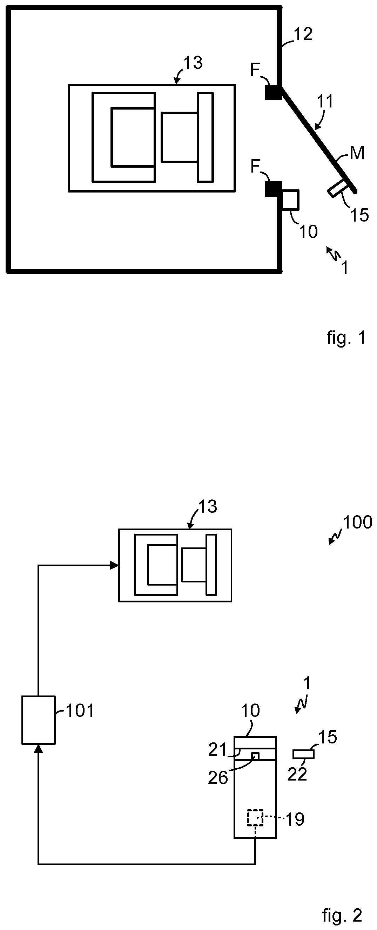

With reference to **Figs. 1** and **2****,** a safety apparatus **1** according to the present invention comprises a safety switch **10** designed to be associated with a guard **11** of a mechanical barrier **12** to protect a machine or industrial plant **13,** hereinafter only machine **13.** By way of example, the guard **11** may be a door, of any type such as a swing door, sliding door or other type, a hatch, a gate, a cover, a covering, a cap, a shutter or anything else. The guard **11** comprises a fixed part **F,** for example a frame, and a movable part **M** which is movable with respect to the fixed part **F** between an open position wherein it allows at least partial access of an operator inside the area delimited by the mechanical barrier **12** and a closed position wherein it does not allow access of the operator inside the area delimited by the mechanical barrier **12.**

The movable part **M** is connected to the fixed part **F** through support members **S** such as, for example, hinges, sliding guides, or others, selected according to the type of guard **11.**

The safety apparatus **1** also comprises an actuator **15** designed to interact with the safety switch **10** upon the opening and closing of the guard **11.** In particular, the safety switch **10** is suitable to be fixed to one of the fixed part **F** and the movable part **M** and the actuator **15** is suitable to be fixed to the other between the fixed part **F** and the movable part **M.**

In the examples provided here, the safety switch **10** is anchored to the fixed part **F** and the actuator **15** is fixed to the movable part **M.**

The safety switch **10** comprises a case **16** containing a control unit **17** of electronic or electromechanical type and switching means **19,** controlled by the control unit **17,** which can undergo to an active state and an inactive state distinguishable from each other.

In this case, the switching means **19** comprise one or more safety OSSD (Output Signal Switching Device) outputs of the electronic type, each of which may undergo to at least one active state and one inactive state distinguishable from each other.

By way of example, a safety output in the active state transmits a signal and turns to a logical state equal to "1" or "ON" while in the inactive state it does not transmit any signal and turns to a logical state equal to "0" or "OFF".

Even more preferably, the switching means **19** comprise at least two independent safety outputs of the OSSD type.

In other possible embodiments, the switching means **19** may also be of other known types and comprise electronic contacts of the mechanical, electromechanical type, relay or any other electrical, electronic or electromechanical element that can selectively switch from an active state wherein it allows the transmission of a signal and an inactive state wherein it does not allow the transmission of the signal.

The switching means **19** are connected to a communication interface (not shown) designed to transmit one or more signals associated with the state of the switching means **19** to one or more devices external to the safety switch **10.** In particular, the communication interface is designed to transmit at least one signal encoding the state of the switching means **19.**

By way of example, the communication interface may comprise one or more connectors, or a communication BUS for example of the IO-Link, IO-Link safety or ProfiSafe or ProfiNet type, or it may be of the wireless type, or any combination thereof.

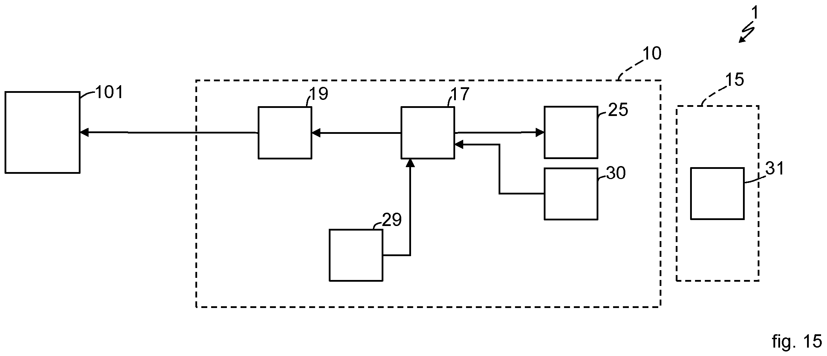

In use, the communication interface may be connected, or linked, to a control device **101** (**Figs. 2** and **15**) designed to control the machine **13** on the basis of the signal associated with the state of the switching means **19.** The control device **101** may comprise a PLC, or a safety module, or a contactor connected to the power supply of the machine **13,** or similar or assimilable devices, or any combination thereof. By way of example, if the state of the switching means **19** is inactive, the control device **101** does not allow the machine **13** to be started or stops its operation.

Alternatively, the communication interface may be connected, or connected, directly to the machine **13.**

The safety switch **10** also comprises a seat **21** for receiving the actuator **15** and a locking mechanism **25** (**Fig. 15**) designed to selectively lock the actuator **15** inside the seat **21.** In particular, the locking mechanism **25** is controlled by the control unit **17** and is designed to undergo to a locked state wherein it holds the actuator **15** in the seat **21** and to an unlocked state wherein the actuator **15** is not held in the seat **21** and can be moved away from the safety switch **10.** For example, in the locked state, the guard **11** cannot be opened, while in the unlocked state, the guard **11** can be opened.

The locking mechanism **25** is arranged inside the case **16** and comprises a locking pin **26** and a moving part (not shown) controlled by the control unit **17** designed to move the locking pin **26** along a locking axis **X** between a locking position wherein it protrudes inside the seat **21** and an unlocked position wherein it is retracted towards the inside of the case **16** with respect to the locked position. The movable part comprises, for example, an electromagnet controlled by the control unit **17** or may comprise any other part suitable for moving the locking pin **26** between the locked position and the unlocked position, and/or vice versa, such as for example an electric motor, a pneumatic part or the like.

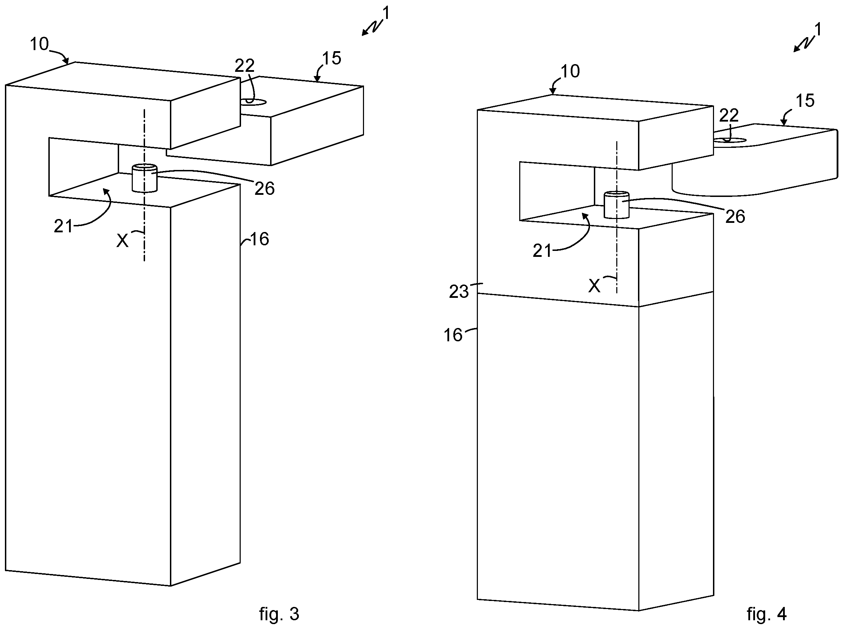

It should be noted that the seat **21** can be made directly on the case **16** (**Fig. 3**) or on a head **23** (**Fig. 4**) fixed to the case **16,** for example at one end thereof.

Preferably, the safety switch **10** also comprises sensor means **29** of the position of the locking pin **26** connected to the control unit **17** to communicate to the latter at least whether the locking pin **26** is in the locking position.

By way of example, the sensor means **29** comprise one or more photoelectric barriers, each of which is positioned to be intercepted by a respective protruding part associated with the locking pin **26** when the latter is in the locking position. The person skilled in the art understands that the sensor means **29** may also be of any other known type, for example mechanical, electromechanical, electronic, magnetic and more.

The actuator **15** comprises a receiving portion **22** of the locking pin **26** which can be engaged by the locking pin **26** when the latter is in the locking position to hold the actuator **15** in the seat **21.**

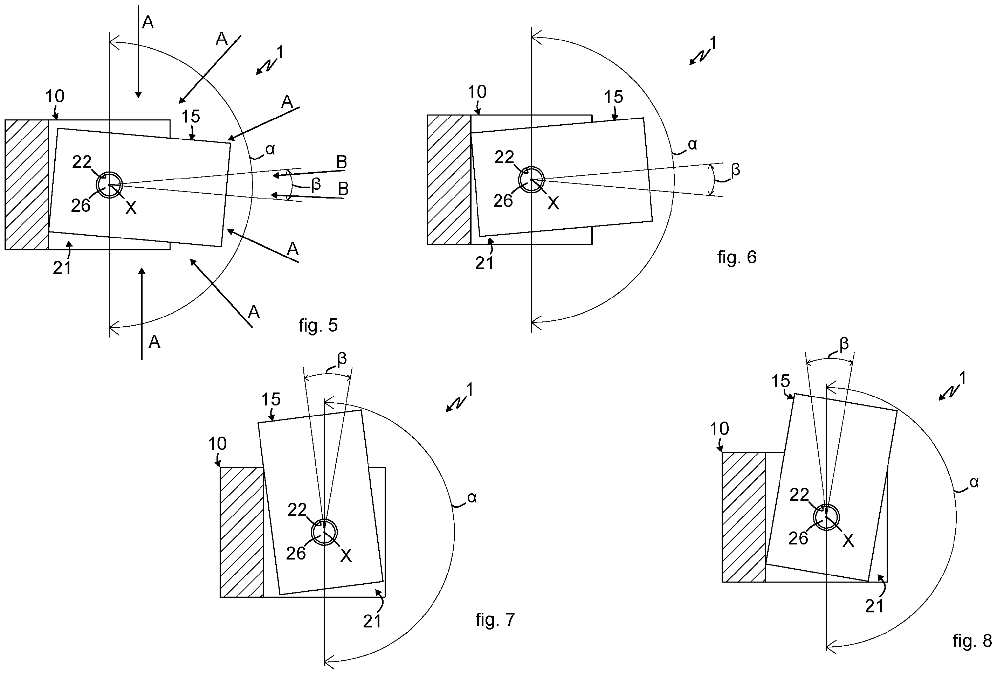

According to an aspect of the present invention, the seat **21** is shaped to allow the insertion of the actuator **15** therein from a plurality of insertion directions **A** (**Fig. 5**) which define an opening angular range **α** of the seat **21** of at least 90°. Preferably, the opening angular range **α** is greater than or equal to 180°. In particular, the amplitude of the opening angular range **α** of the seat **21** is at least 90° and preferably is greater than or equal to 180°.

For example, insertion direction **A** means the direction of the trajectory followed by the actuator **15** to enter into the seat **21.**

Preferably, the insertion directions **A** are coplanar with each other and define a star of straight lines converging towards the vertex of the opening angular range **α.**

Advantageously, this provides a high level of flexibility in the use of the safety apparatus **1** since the actuator **15** can be inserted into the seat **21** according to a wide range of insertion directions **A,** thus allowing the safety device **1** to be installed on any type of guard **11.** For example, but not limited to, the safety apparatus **1** may be easily compatible with any guard **11** in which the movable part **M** closes in a hinged manner with respect to the fixed part **F** regardless of the centre and closing radius of the guard **11** and the mutual orientation between the safety switch **10** and the actuator **15.**

It should be noted that the opening angular range **α** can be measured on a plane perpendicular to the locking axis **X** and has its vertex comprised on an axis parallel or coinciding with the locking axis **X.**

Furthermore, the seat **21** is shaped to allow the actuator **15** to be positioned inside it along one or more safety directions **B.**

When the actuator **15** is aligned along a safety direction **B** it can be locked by the locking mechanism **25** and the control unit **17** can turn the switching means **19** into the active state. Preferably, but not necessarily, the control unit **17** is adapted to turn or hold the switching means **19** into the active state only when the actuator **15** is aligned along a safety direction **B** and is locked by the locking mechanism **25.** Preferably, but not necessarily, the control unit **17** is adapted to turn the locking mechanism **25** into the locking state only when the actuator **15** is aligned along a safety direction **B.**

In accordance with an aspect of the present invention, said one or more safety directions **B** are comprised in at least one safety angular range **β** having an amplitude smaller than the opening angular range **α.**

It is specified that in this description and in the claims, the term "amplitude" referring to an angular range **α** or **β** means the maximum amplitude of the angular range. Preferably, the safety directions **B** will be coplanar with each other and will define a star of straight lines converging towards the vertex of the safety angular range **β.** Preferably the safety angular range **β** and the opening angular range **α** are at least partially overlapping. It should be noted that a seat **21** may also define two or more different safety angular ranges **β** that are not continuous with each other. Furthermore, the two angular ranges **α** and **β** may have same vertex or placed on the same axis.

In some embodiments, the at least one safety angular range **β** has an amplitude close to 0°, that is, the safety angular range **β** comprises substantially a single safety direction **B** in which the actuator **15** can be locked by the locking mechanism **25.**

In other embodiments, the actuator **15** may be positioned in a plurality of safety positions **B** defining whit each other a safety angular range **β** having an amplitude greater than 0°, for example between 0° and 45°. Preferably, the amplitude of the safety angular range **β** is between 0° and 30°, even more preferably between 0° and 10°.

It should be noted that the safety angular range **β** is also measured on a plane perpendicular to the locking axis **X** and has its vertex on an axis parallel or coinciding with the locking axis **X.**

According to an embodiment, represented by way of example in **Figs. 5** to **8****,** the safety angular range **β** is defined by the mechanical coupling between the actuator **15,** the seat **21** and the locking pin **26.**

In particular, in these embodiments, the rotation of the actuator **15** around the locking axis **X,** when it is locked by the locking pin **26,** is limited to the safety angular range **β** by the mechanical interference between the actuator **15** and the seat **21.**

For example, **Figs. 5** and **6** respectively show the actuator **15** positioned at a first and at second end of a safety angle range **β** compatible with a first orientation of the actuator **15** with respect to the seat **21.** **Figs. 6** and **7** respectively show the actuator **15** positioned at a first and at second end of another safety angle range **β** compatible with a second orientation of the actuator **15** with respect to the seat **21.**

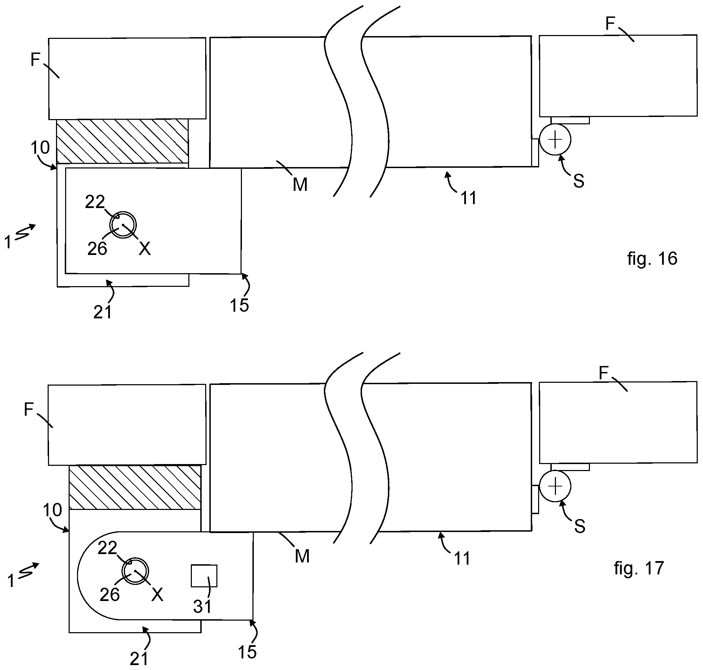

Advantageously, in these embodiments, in case of a failure of the supports **S** of the movable part **M** of the guard **11,** the movable part **M** may not rotate around the locking axis **X** beyond the safety angle range **β** (**Fig. 16**). In this way, the safety apparatus **1** of the present invention allows to increase the safety of the operator even in case of a failure of the supports **S** of the movable part **M** of the guard **11** by mechanically limiting the rotation of the actuator **15,** and therefore of the movable part **M** of the guard **11,** only to the safety angular range **β** so as not to expose the operator to the machine **13** during its operation.

Preferably, in these embodiments the receiving portion **22** of the locking pin **26** for the locking pin **26** of the actuator **15** is aligned with the locking axis **X** only when the actuator **15** is aligned along a direction comprised in the safety angular range **β.** Optionally, the safety switch **10** and the actuator **15** comprise respective communication members **30, 31** designed to interact remotely when the actuator **15** is close to the safety switch **10** and transmit a presence signal **P** to the control unit **17.** In particular, the safety switch **10** comprises a first communication member **30** and the actuator **15** comprises a second communication member **31** designed to interact remotely with the first communication member **30** when it is close thereto. The first communication member **30** is connected to the control unit **17** and is designed to transmit thereto a presence signal **P** to indicate that the actuator **15** is close to the safety switch **10.**

By way of example, the first communication member **30** is an RFID (Radio Frequency Identification) antenna and the second communication member **31** is an RFID transponder. In this case, the RFID antenna is suitable for transmitting a signal suitable for exciting the RFID transponder when the latter is close to the RFID antenna. The RFID transponder, when excited by the RFID antenna, is also suitable for transmitting a response signal to the RFID antenna encoding a recognition code of the actuator **15.** The RFID antenna is designed to receive the response signal transmitted by the transponder and to transmit to the control unit **17** a presence signal P correlated to the response signal transmitted by the transponder. This allows the control unit **17** to verify that only the right actuator or right actuators **15** interacts/interact with the safety switch **10.**

Furthermore, the presence signal **P** allows the control unit **17** to detect that the movable guard **11** is closed. For example, when the locking mechanism **25** is in the unlocked state and the control unit **17** receives the presence signal **P,** it is detected that the movable guard **11** is closed but not locked.

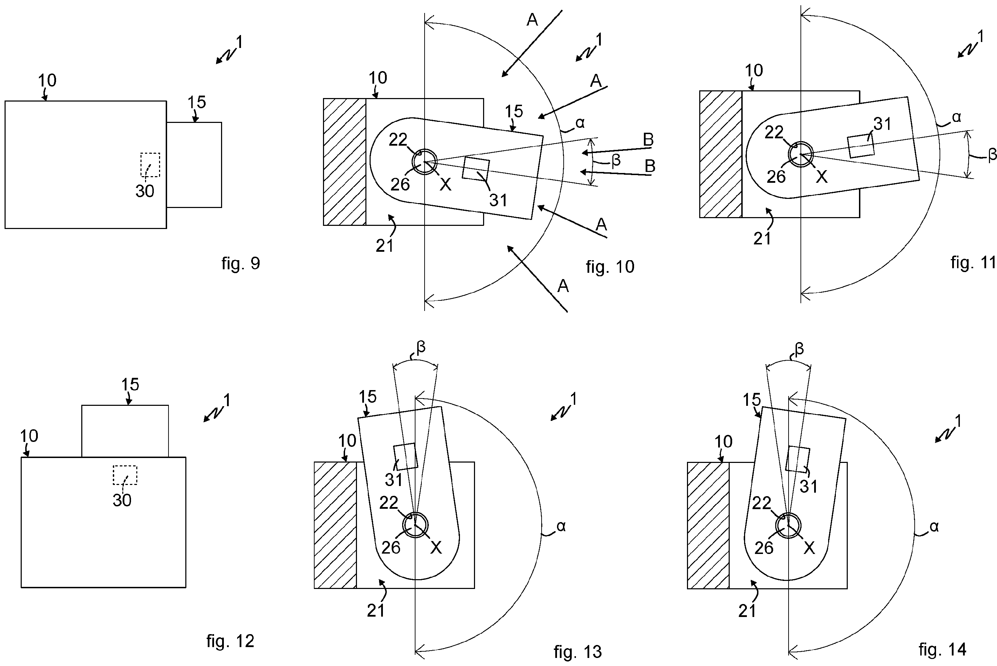

In accordance with other embodiments, represented by way of example in **Figs. 9** to **14****,** the control unit **17** is designed to process the presence signal **P** to detect whether or not the direction along which the actuator **15** is aligned is comprised in a safety angular range **β.** In these embodiments, the rotation of the actuator **15** around the locking axis **X** may also not be mechanically limited to the safety angular range **β.**

In particular, the control unit **17** is adapted to detect at least one parameter of the presence signal **P** correlated to the transponder response signal and to compare said parameter with a reference threshold in order to determine whether or not the actuator **15** is aligned along a direction comprised in the safety angular range **β.**

The at least one parameter of the presence signal **P** may be selected from a group comprising amplitude, frequency, bit or byte error rate, or others. In these embodiments, the variation of the presence signal **P** as a function of the mutual positioning between the first and second communication members **30, 31** is exploited to evaluate whether the actuator **15** is aligned along a direction comprised in the safety angular range **β.** In fact, a rotation of the actuator **15** around the locking axis **X** beyond the safety angular range **β** leads to a misalignment between the first and second communication members **30, 31** such as to bring said parameter of the presence signal **P** beyond said reference threshold.

Preferably, in these embodiments the position of the communication member **30** is offset, i.e. distant, from the locking axis **X** around which the actuator **15** can rotate when it is locked, as can be seen in **Figs. 9** to **14****.**

For example, **Fig. 9** shows the actuator **15** inserted into the seat **21** according to a first orientation, **Figs. 10** and **11** respectively show the actuator **15** positioned at a first and at a second end of a safety angular range **β** compatible with the first orientation of the actuator **15** with respect to the seat **21.**

**Fig. 12** shows the actuator **15** inserted into the seat **21** according to a second orientation and **Figs. 13** and **14** respectively show the actuator **15** positioned at a first and at a second end of another safety angle range **β** compatible with the second orientation of the actuator **15** with respect to the seat **21.**

Preferably, the first communication member **30** and the second communication member **31** are at least partially overlapped with respect to an axis parallel or coinciding with the locking axis **X** when the actuator **15** is aligned along a direction comprised in said safety angle range **β.**

In these embodiments, the control unit **17** is designed to turn the switching means **19** into the active state only if it detects that the actuator **15** is aligned along a direction comprised in the safety angle range **β.** Furthermore, the control unit **17** is designed to turn the switching means **19** into the inactive state if it detects that the actuator **15** is not aligned in a direction comprised in the safety angle range **β.** Furthermore, optionally, the control unit **17** is designed to turn the locking mechanism **25** into the locked state only if it detects that the actuator **15** is aligned along a direction within the safety angular range **β.**

## Claims

1. Safety apparatus (**1**) comprising a safety switch (**10**) and an actuator (**15**) both designed to be associated with a guard (**11**) of a protective barrier (**12**) for a machine (**13**) or industrial plant and to interact with each other upon the opening and closing of said guard (**11**), and wherein said safety switch (**10**) comprises:
- switching means (**19**) designed to undergo to an active state and an inactive state;
- a seat (**21**) for said actuator (**15**) shaped to allow both the insertion of said actuator (**15**) from a plurality of insertion directions (**A**) defining an opening angular range (**α**) and the alignment of said actuator (**15**) along at least one safety direction (**B**) comprised in a safety angular range (**β**);
- a locking mechanism (**25**) comprising a locking pin (**26**) movable along a locking axis (**X**) designed to selectively lock said actuator (**15**) in said seat (**21**);
- a control unit (**17**) connected to said switching means (**19**) and designed to turn or hold them into said active state when said actuator (**15**) is arranged in said seat (**21**) aligned along a direction comprised in said safety angular range (**β**);
**characterized in that** said safety angular range (**β**) has an amplitude lower than the amplitude of said opening angular range (**α**).

2. Safety apparatus (**1**) as claimed in claim 1, **characterized in that** the amplitude of said opening angular interval (**α**) is at least 90° and the amplitude of said safety angular interval (**β**) is comprised between 0° and 45°.

3. Safety apparatus (**1**) as claimed in claim 1 or 2, **characterized in that** the amplitude of said angular opening range (**α**) is greater than or equal to 180°.

4. Safety apparatus (**1**) as claimed in any preceding claim, **characterized in that** said control unit (**17**) is designed to move said switching means (**19**) into said active state only when said actuator (**15**) is locked in said seat (**21**) and is aligned along a direction comprised in said safety angular range (**β**).

5. Safety apparatus (**1**) as claimed in any preceding claim, **characterized in that** the rotation of said actuator (**15**), when locked by said locking mechanism (**25**), about said locking axis (**X**) is limited to said safety angular range (**β**) by mechanical interference between said actuator (**15**) and said seat (**21**).

6. Safety apparatus (**1**) as claimed in any preceding claim, wherein said safety switch (**10**) comprises a first communication member (**30**) and said actuator (**15**) comprises a second communication member (**31**) designed to interact remotely with said first communication member (**30**) when it is close thereto to transmit a presence signal (**P**) to said control unit (**17**), **characterized in that** said control unit (**17**) is designed to compare at least one parameter of said presence signal (**P**) with at least one predetermined threshold for detecting whether or not said actuator (**15**) is aligned along a direction comprised in said safety angular range (**β**).

7. Safety apparatus (**1**) as claimed in claim 6, **characterized in that** said control unit (**17**) is designed to turn said switching means into said inactive state when said actuator (**15**) is aligned along a direction not comprised in said safety angular range (**β**).

8. Safety apparatus (**1**) as claimed in claim 6 or 7, **characterized in that** said first communication member (**30**) and said second communication member (**31**) are at least partially overlapped when said actuator (**15**) is aligned along a direction comprised in said safety angular range (**β**).

9. Safety apparatus (**1**) as claimed in any claim from 6 to 8, **characterized in that** said first communication member (**30**) is positioned offset, or distant, from said locking axis (**X**).

10. Safety apparatus (**1**) as claimed in any preceding claim and wherein said locking pin (**26**) is designed to undergo to at least one locking position wherein it protrudes into said seat (**21**), **characterized in that** said safety switch (**10**) comprises sensor means (**29**) of the position of said locking pin (**26**) connected to the control unit (**17**) to communicate to the latter whether said locking pin (**26**) is in said locking position.

11. A safety system comprising a safety apparatus (**1**) as claimed in any preceding claim and a control device (**101**) connected to said safety switch (**10**) and to a machine (**13**), wherein said control device (**101**) is designed to control the operation of said machine (**13**) as a function of the state of said switching means (**19**).
